# EUROPEAN PATENT APPLICATION

(11) **EP 4 596 637 A1**
(43) Date of publication of application: **06.08.2025**
(21) Application number: 23872342.3
(22) Date of filing: 26.09.2023
(51) Int. Cl.: C08L 101/12, C08K 3/01, C08L 91/06, E04B 1/94

(54) **RESIN COMPOSITION**

(30) Priority: 27.09.2022 JP 2022153525
(71) Applicant: SEKISUI CHEMICAL CO., LTD., Osaka-shi Osaka 530-8565 (JP)
(72) Inventor: MIYATA, Shingo, Hasuda-shi, Saitama 349-0198 (JP); KINOSHITA, Masami, Mishima-gun, Osaka 618-0021 (JP); IKEUCHI, Takuto, Koka-shi, Shiga 528-0056 (JP); ISHII, Yasuyuki, Koka-shi, Shiga 528-0056 (JP)
(74) Representative: Ter Meer Steinmeister & Partner
(86) International application number: PCT/JP2023/034944
(87) International publication number: WO 2024/071119

(57) **Abstract**

A resin composition comprising a thermoplastic resin that is solid at an ordinary temperature and is flowable at 160°C, wherein the resin composition has a viscosity at 1 rpm at 160°C of 250,000 mPa•s or more. A resin composition comprising a thermoplastic resin that is solid at ordinary temperature and is flowable at 160°C, and further comprising a reactive component.

## Description

### Technical Field

The present invention relates to a resin composition for use in, for example, a thermally expandable refractory material.

### Background Art

Conventionally, thermally expandable refractory materials that expand upon heating have been widely used in buildings and the like. The thermally expandable refractory materials can prevent fires from occurring and spreading, because expansion residues resulting from expanding upon heating form a refractory heat-insulating layer, which achieves refractory insulation performance. Thermally expandable refractory materials are often in the form of molded products, and are generally applied by hand, optionally after processing such as cutting.

Thermally expandable refractory materials have conventionally been attempted to be used in a variety of ways other than application by hand. For example, PTL1 and PTL2 disclose curable compositions that have flowability before cured and high refractory performance and shape retention after cured so that they can be coated on structures of various shapes and cured for use. PTL3 discloses a resin composition for casting that comprises a curable component and an expandable graphite.

In addition, PTL4 discloses that a resin composition comprising an expandable graphite and a resin component is used in the form of a refractory sheet, putty, paint, coating, or the like. PTL4 shows that a thermosetting resin or a thermoplastic resin is used as a resin component.

### Citation List

### Patent Literature

PTL1: JP 6825618 B
PTL2: WO 2019/049797
PTL3: WO 2019/087641
PTL4: JP 2020-193324 A

### Summary of Invention

### Technical Problem

Thermally expandable refractory materials have been attempted to be coated on building materials such as fittings by mechanical coating in order to improve work efficiency. As described in PTL1, PTL 2, and PTL 4, curable compositions are generally used for thermally expandable refractory materials used for coating applications. However, the curable compositions require aging time for being cured or equipment for promoting curing, which leads to poor productivity and initial costs for introducing equipment.

Conventionally, hot-melt type resin compositions comprising a thermoplastic resin as a resin component have sometimes been used in coating applications. The hot-melt type resin compositions generally have a fast solidification rate from being coated to solidification, and aging time and equipment to accelerate curing are not required. However, the hot-melt type resin compositions tend to drip when heated, and as a result, for example, when used in thermally expandable refractory materials, they have a problem that they are less effective in suppressing the spread of fire in the event of fire.

Therefore, it is an object of the present invention to provide a resin composition that is less likely to drip when heated and can be enhanced in the effect of suppressing the spread of fire in the event of fire.

### Solution to Problem

As a result of diligent research, the present inventors have found that the above object can be achieved by increasing the viscosity at 1 rpm at 160°C to a predetermined value or more in a resin composition comprising a specific thermoplastic resin, and have completed the present invention as described below. The subject matter of the present invention is as described in the following [1] to [13].
[1] A resin composition comprising a thermoplastic resin that is solid at an ordinary temperature and is flowable at 160°C, the resin composition having a viscosity at 1 rpm at 160°C of 250,000 mPa•s or more.
[2] A resin composition comprising a thermoplastic resin that is solid at an ordinary temperature and is flowable at 160°C, and further comprising a reactive component.
[3] The resin composition according to [1], further comprising a reactive component.
[4] The resin composition according to [2] or [3], wherein the reactive component is at least one selected from the group consisting of a thermosetting component and a moisture-curable component.
[5] The resin composition according to any one of [1] to [4], comprising a thermally expandable compound.
[6] The resin composition according to [5], wherein the thermally expandable compound comprises a thermally expandable graphite.
[7] The resin composition according to [5] or [6], wherein the thermally expandable compound comprises an expandable flame retardant.
[8] The resin composition according to any one of [1] to [7], comprising a tackifying resin.
[9] The resin composition according to any one of [1] to [8], comprising a wax.
[10] The resin composition according to any one of [1] to [9], further comprising a thixotropic agent.
[11] The resin composition according to [10], wherein the thixotropic agent is at least one selected from the group consisting of a calcium carbonate particle, amide, fumed silica and a glass fiber.
[12] The resin composition according to any one of [1] and [3] to [11], wherein the ratio of the viscosity at 1 rpm to the viscosity at 10 rpm at 160°C is more than 1.3.
[13] A thermally expandable refractory material, comprising the resin composition according to any one of [1] to [12].

### Advantageous Effects of Invention

The resin composition of the present invention is less likely to drip when heated and can be enhanced in the effect of suppressing the spread of fire in the event of fire.

### Description of Embodiments

Hereinafter, the present invention will be described in detail with reference to the embodiments thereof.

### <Resin composition>

The resin composition of the present invention comprises a thermoplastic resin that is solid at an ordinary temperature and is flowable at 160°C, and has a viscosity at 1 rpm (hereinafter, sometimes referred to as "static viscosity") at 160°C of 250,000 mPa•s or more.

In another aspect, the resin composition of the present invention comprises a thermoplastic resin that is solid at an ordinary temperature and is flowable at 160°C, and further comprises a reactive component.

When the resin composition of the present invention has a viscosity at 1 rpm (static viscosity) at 160°C of 250,000 mPa•s or more, it is less likely to drip, for example, even if it is heated to a high temperature after coating. Therefore, even in the event of fire, it does not drip and can be easily enhanced in the effect of suppressing the spread of fire.

In addition, when the resin composition of the present invention comprises a reactive component, it is less likely to drip, for example, even if it is heated to a high temperature after coating. Therefore, in the event of fire, it does not drip and can be easily enhanced in the effect of suppressing the spread of fire.

### [Viscosity of resin composition]

As described above, the resin composition of the present invention has a viscosity at 1 rpm (static viscosity) at 160°C of 250,000 mPa•s or more. If the static viscosity at 160°C is less than 250,000 mPa•s, the resin composition drips when it is heated to a high temperature, which results in a decrease in the effect of suppressing the spread of fire in the event of fire. In addition, for example, if the resin composition is coated on an object to be applied which is positioned upright, it may drip immediately after application.

From the viewpoint of further enhancing the effect of suppressing the spread of fire, or the like, the static viscosity at 160°C is preferably 250,000 mPa•s or more, and more preferably 500,000 mPa•s or more. The higher the static viscosity at 160°C, the better, from the viewpoint of the effect of suppressing the spread of fire, but it is preferably 1,900,000 mPa•s or less, and more preferably 1,500,000 mPa•s or less. As described above, by keeping the static viscosity at a certain value or less, the kinematic viscosity at 160°C, which will be described below, can be easily decreased.

The resin composition of the present invention preferably has a viscosity at 10 rpm (hereinafter, sometimes referred to as "kinematic viscosity") at 160°C of 200,000 mPa•s or less. When the kinematic viscosity is equal to or less than the above upper limit, the resin composition is enhanced in coatability and it can be easily subjected to mechanical coating or the like. The kinematic viscosity at 160°C is more preferably 170,000 mPa•s or less, and still more preferably 140,000 mPa•s or less, from the viewpoint of coatability. The lower the kinematic viscosity of the resin composition of the present invention, the better, and the lower limit thereof is not particularly limited, but is, for example, 30,000 mPa•s or more.

The resin composition of the present invention preferably has a ratio (TI value) of the viscosity at 1 rpm (static viscosity) to the viscosity at 10 rpm (kinematic viscosity) at 160°C of more than 1.3. When the TI value is more than 1.3, the resin composition can be reduced in viscosity during coating to provide it with good coatability, while it is prevented from dripping by heating after coating, so that it can be easily increased in the effect of suppressing the spread of fire. The TI value is more preferably 2 or more, and still more preferably 3 or more. The higher the TI value, the better, and the upper limit thereof is not particularly limited, but is, for example, 20 or less.

The viscosity of the resin composition can be adjusted by appropriately selecting each component comprised in the resin composition and the content thereof. For example, by adjusting the type and content of the thixotropic agent, the TI value can be increased, and the kinematic viscosity at 160°C can be thereby decreased while the static viscosity can be increased. Even without the thixotropic agent, the TI value and static viscosity can be increased with a compound with a high thickening effect (for example, a reactive component such as a thermosetting resin represented by a silicone resin or a moisture-curable resin), as appropriate.

The viscosity at 1 rpm (static viscosity) and the viscosity at 10 rpm (kinematic viscosity) at 160°C are viscosities measured with a Brookfield viscometer.

The resin composition of the present invention, to which a reactive component is added, is less likely to drip by heating to a high temperature after coating, not only when the static viscosity at 160°C is 250,000 mPa•s or more, but also when the static viscosity at 160°C is less than 250,000 mPa•s. As a result, the resin composition does not drip in the event of fire, and can be easily enhanced in the effect of suppressing the spread of fire.

That is, even when the static viscosity at 160°C is less than 250,000 mPa•s, it is presumed that, by adding the reactive component, the resin composition is less likely to drip because it is cured by the heat in the event of fire when a thermosetting component is used as the reactive component, or it is cured by the moisture in the atmosphere after coating when a moisture-curable component is used as the reactive component.

Examples of the reactive component include the thermosetting components and the moisture-curable components as described below, and the contents thereof are also as described below.

### [Thermoplastic resin]

As described above, the thermoplastic resin comprised in the resin composition of the present invention is a thermoplastic resin that is solid at an ordinary temperature and is flowable at 160°C. By using such a thermoplastic resin in the resin composition of the present invention, it can develop flowability when heated while being solid at an ordinary temperature, and it can be solidified by cooling again. Therefore, it can be suitably used as a hot-melt type resin composition. When the resin composition is a hot-melt type resin composition, it can solidify immediately by being cooled when allowed to stand at around an ordinary temperature after coating, so that the resin composition is enhanced in workability. That it is solid at an ordinary temperature means that it is solid at 23°C and 1 atmosphere.

As described above, the thermoplastic resin is flowable at a temperature of 160°C or less, but for example, one with a static viscosity (1 rpm) at 160°C of 5,000,000 mPa•s or less is preferably used.

Examples of the thermoplastic resin include resins that have been conventionally used as base resins for hot-melt adhesives. Specific examples of such a resin to be used include an ethylene-vinyl acetate copolymer resin (EVA), an ethylene-(meth)acrylate copolymer resin, a polyolefin-based resin and a thermoplastic elastomer. The thermoplastic resins may be used alone or in combination of two or more thereof.

Among these, preferred is at least one selected from an ethylene-vinyl acetate copolymer resin (EVA) and an ethylene-(meth)acrylate copolymer resin. When these thermoplastic resins are used, the resin composition can be enhanced in adhesion to an object to be applied and poor application is less likely to occur. In addition, when the thermally expandable compound described below is appropriately expanded, appropriate refractory performance can be easily ensured. The thermoplastic resin is more preferably an ethylene-vinyl acetate copolymer resin (EVA) among the above.

The ethylene-vinyl acetate copolymer resin (EVA) is not particularly limited as long as it is a resin obtained by copolymerizing ethylene and vinyl acetate. The vinyl acetate content of the ethylene-vinyl acetate copolymer resin is not particularly limited, but it is preferably 15 to 45% by mass, more preferably 20 to 40% by mass and still more preferably 25 to 35% by mass, from the viewpoint of being suitably used in a hot-melt type resin composition. The vinyl acetate content is as measured in accordance with JIS K 6924-1:1997.

Examples of the (meth)acrylate constituting the ethylene-(meth)acrylate copolymer resin include an alkyl (meth)acrylate, such as methyl acrylate, ethyl acrylate, n-propyl acrylate, n-butyl acrylate, isobutyl acrylate, 2-ethylhexyl acrylate, isooctyl acrylate, methyl methacrylate or ethyl methacrylate, and a (meth)acrylate having a functional group such as an epoxy group or a hydroxyl group, such as 2-hydroxyethyl acrylate or glycidyl acrylate.
These may be used alone or in combination of two or more thereof.

The ethylene-(meth)acrylate copolymer resin may also have a third component, such as carbon monoxide or maleic anhydride, copolymerized therewith.

The ethylene-(meth)acrylate copolymer resin is preferably an ethylene-methyl methacrylate copolymer (EMMA).

The content of a building block derived from the (meth)acrylate in the ethylene-(meth)acrylate copolymer resin is, but not particularly limited, for example, 5 to 50% by mass, preferably 10 to 40% by mass, and more preferably 15 to 35% by mass.

Examples of the polyolefin-based resin include an olefinic copolymer obtained by copolymerizing ethylene with an α-olefin having 3 to 20 carbon atoms. Examples of the α-olefin having 3 to 20 carbon atoms include propylene, isobutylene, 1-butene, 1-pentene, 1-hexene, 4-methyl-1-pentene and 1-octene. Among the above olefinic copolymers, a copolymer of ethylene and an α-olefin having 6 to 8 carbon atoms are preferred, and a copolymer of ethylene and 1-octene is more preferred. These olefinic copolymers may be used alone or in combination of two or more thereof.

The above olefinic copolymer preferably has a copolymerization percentage of α-olefin of 20 to 40 mol %.

Examples of the copolymer of ethylene and 1-octene to be used can include products manufactured by Dow Chemical Company, which are synthesized using a single-site metallocene catalyst and are commercially available under the trade name "Affinity EG8185" (MFR=30), the trade name "Affinity EG8200" (MFR=5), the trade name "Affinity GA1900" (MFR=1000), the trade name "Affinity GA1950" (MFR=500) and the trade name "Affinity PT1409" (MFR=6). These commercially available copolymers of ethylene and 1-octene have a copolymerization percentage of 1-octene of 35 to 37 mol %.

Copolymers other than the above-described copolymers of ethylene and α-olefin having 3 to 20 carbon atoms can also be used. They may include a polyethylene, a polypropylene, a polyhexene, a polyoctene, a propylene-butene copolymer, a propylenehexene copolymer and a propylene-octene copolymer. These polyolefin resins may also be appropriately selected, for example, so that the melt flow rate is within the above range.

Examples of the thermoplastic elastomer include such a thermoplastic elastomer as a styrenic, olefinic, ester-based or urethan-based one.

The melt flow rate (MFR) of the thermoplastic resin is not particularly limited, but it is, for example, 1 to 3000 g/10 min, preferably 5 to 2500 g/10 min, more preferably 10 to 1500 g/10 min, still more preferably 100 to 1000 g/10 min, and even more preferably 150 to 1000 g/min, from the viewpoint of coatability, adhesion or the like. The melt flow rate is as measured under a load of 21.2 N at 190°C. The melt flow rate of the ethylene-vinyl acetate copolymer resin is preferably measured in accordance with JIS K 6924-1: 1997. The melt flow rate of thermoplastic resins, other than the ethylene-vinyl acetate copolymer resin, such as an ethylene-(meth)acrylate copolymer resin may be measured in accordance with JIS K7210: 1999.

The thermoplastic resin to be used may be commercially available products. "Ultrasen 726" manufactured by Tosoh Corporation can be used as an ethylene-vinyl acetate copolymer resin, and "ACRYFT CM5021" manufactured by SUMITOMO CHEMICAL COMPANY, LIMITED can be used as an ethylene-methyl methacrylate copolymer.

The content of the thermoplastic resin in the resin composition is preferably 10% by mass or more, more preferably 15% by mass or more, and still more preferably 20% by mass or more, based on the total amount of the resin composition. When the resin composition comprises the thermoplastic resin at a content of not less than a certain level, it can be used suitably as a hot-melt type resin composition, and can also easily develop adhesion or the like. The content of the thermoplastic resin in the resin composition is, for example, 80% by mass or less, preferably 60% by mass or less, more preferably 50% by mass or less, and still more preferably 40% by mass or less. When the resin composition comprises the thermoplastic resin at a content of not more than a certain level, the resin composition is more likely to comprise, at a content of not less than a certain level, various components such as a thermally expandable compound, a tackifying resin, a wax, a thermosetting component and a thixotropic agent, which will be described below, which makes it easier to keep the viscosity within a desired range and to provide various performances.

### [Thermally expandable compound]

The resin composition of the present invention preferably comprises a thermally expandable compound. The thermally expandable compound is a compound that expands in itself or generates a gas or the like by heating to expand a thermally expandable composition. Therefore, when the resin composition of the present invention comprises a thermally expandable compound, it can be used as a thermally expandable refractory material. When the resin composition comprises the thermally expandable compound, it expands when heated to a temperature equal to or more than the expansion onset temperature of the thermally expandable compound and the expanded residues form a refractory heat-insulating layer.

Examples of the thermally expandable compound include a thermally expandable layered inorganic substance, an expandable flame retardant, a thermally expandable microcapsule, and a thermally decomposable foaming agent. The thermally expandable compounds may be used alone or in combination of two or more thereof.

### (Thermally expandable layered inorganic substance)

The thermally expandable layered inorganic substance is a conventionally known substance that expands upon heating, and includes vermiculite and a thermally expandable graphite, and preferred is a thermally expandable graphite among them. The thermally expandable layered inorganic substances may be used alone or in combination of two or more thereof.

The thermally expandable layered inorganic substance to be used may be also in the form of a particle or a flake. The thermally expandable layered inorganic substance, particularly a thermally expandable graphite can be increased in the degree of expansion, so that it can form voids having a large volume when expanded by heating. The expansion onset temperature can be also adjusted to a temperature range suitable for a refractory material. In addition, residue hardness of expansion residues can be easily increased, to provide a refractory material excellent in refractory performance and fire-extinguishing performance and to easily enhance the effect of suppressing the spread of fire in the event of fire.

The thermally expandable graphite is produced by treating a powder of a natural flake graphite, a pyrolytic graphite, Kish graphite or the like with an inorganic acid and a strong oxidizing agent to form a graphite intercalation compound, and is one of crystalline compound which keeps the layered structure of carbon. Examples of the inorganic acid include concentrated sulfuric acid, nitric acid and selenic acid. Examples of the strong oxidizing agent include concentrated nitric acid, a persulfate, perchloric acid, a perchlorate, a permanganate, a bichromate and hydrogen peroxide. The thermally expandable graphite produced by acid treatment as described above may be further neutralized with ammonia, a lower aliphatic amine, an alkali metal compound, an alkaline earth metal compound and the like.

The thermally expandable graphite preferably has a particle size of 20 to 200 mesh. When the thermally expandable graphite has a particle size which falls within the above range, it expands to easily form voids having a large volume, thereby leading to an enhancement in the refractory performance. Also, the dispersing ability into a resin is also enhanced.

The thermally expandable graphite preferably has an aspect ratio of 2 or more, more preferably 5 or more, and still more preferably 10 or more. The upper limit of the average aspect ratio of the thermally expandable graphite is not particularly limited, but it is preferably 1,000 or less from the viewpoint of crack prevention of the thermally expandable graphite. When the thermally expandable graphite has an average aspect ratio of 2 or more, it expands to easily form voids having a large volume, leading to an enhancement in fire retardancy.

The average aspect ratio of the thermally expandable graphite is an average of the values determined by measuring the maximum dimension (longest diameter) and the minimum dimension (shortest diameter) of each of 10 pieces of thermally expandable graphite and dividing the maximum dimension (longest diameter) by the minimum dimension (shortest diameter). The largest diameter and shortest diameter of the thermally expandable graphite can be measured, for example, by using a field emission scanning electron microscope (FE-SEM).

### (Expandable flame retardant)

Examples of the expandable flame retardant include a phosphorus-containing compounds such as ammonium phosphate, ammonium polyphosphate, aluminum phosphite, and melamine polyphosphate. The expandable flame retardant is a flame retardant that can provide a thermally expandable refractory material with flame retardancy, while having the property of expanding itself by heating. The expandable flame retardants may be used alone or in combination of two or more thereof. The expandable flame retardant is preferably at least one selected from ammonium polyphosphate and aluminum phosphite, from the viewpoint of refractory performance and residue hardness.

### (Thermally expandable microcapsule)

The thermally expandable microcapsule has a volatile substance such as a low-boiling solvent encapsulated inside an outer shell resin. The encapsulated volatile substance volatilizes or expands, so that the resulting pressure causes the outer shell to expand and the particle size to increase.

The outer shell of the thermally expandable microcapsule is preferably formed of a thermoplastic resin. The thermoplastic resin to be used can be one or two or more of a vinyl polymer or copolymer of ethylene, styrene, vinyl acetate, vinyl chloride, vinylidene chloride, acrylonitrile, butadiene or chloroprene; a polyamide such as nylon 6 or nylon 66; and a polyester such as polyethylene terephthalate. Among them, a copolymer of acrylonitrile is preferred because the encapsulated volatile substance is difficult to permeate it. The volatile substance encapsulated in the thermally expandable microcapsule to be used is one or two or more low boiling liquid selected from the group consisting of a hydrocarbon having 3 to 7 carbon atoms such as propane, propylene, butene, n-butane, isobutane, isopentane, neopentane, n-pentane, hexane or heptane; a halide such as methyl chloride or methylene chloride, a chlorofluorocarbon such as CCl₃F and CCl₂F₂; a tetraalkyl silane such as tetramethyl silane or trimethylethyl silane, and petroleum ether.

Suitable examples of the thermally expandable microcapsule include a microcapsule having a copolymer of acrylonitrile and vinylidene chloride as an outer shell resin and having a hydrocarbon having 3 to 7 carbon atoms, such as isobutane, encapsulated.

The thermally expandable microcapsules may be used alone or in combination of two or more thereof.

### (Thermally decomposable foaming agent)

The thermally decomposable foaming agent includes a compound that foams by heating to generate a gas. The gas generated by the thermally decomposable foaming agent causes a resin composition to expand. The thermally decomposable foaming agent to be used can be an organic or inorganic chemical foaming agent.

Examples of the organic foaming agent include azodicarbonamide; a metal salt of azodicarboxylic acid (such as barium azodicarboxylate); an azo compound such as azobisisobutyronitrile; a nitroso compound such as N,N'-dinitrosopentamethylene tetramine; a hydrazine derivative such as hydrazodicarbonamide, 4, 4'-oxybis(benzenesulfonyl hydrazide) or toluenesulfonyl hydrazide; a semicarbazide compound such as toluenesulfonyl semicarbazide; melamine; dicyandiamide; and Pentarit (pentaerythritol).

Examples of the inorganic foaming agent include ammonium carbonate, sodium carbonate, ammonium hydrogen carbonate, sodium hydrogen carbonate, ammonium nitrite, sodium borohydride and anhydrous monosodium citrate.

Among these, from the viewpoint of producing fine cells and from the viewpoint of economy and safety, an azo compound and a nitroso compound are preferred, and azodicarbonamide, azobisisobutyronitrile and N,N'-dinitrosopentamethylene tetramine are more preferred, and azodicarbonamide is particularly preferred. The thermally decomposable foaming agents may be used alone or in combination of two or more thereof.

When a thermally expandable microcapsule or a thermally decomposable foaming agent is used as the thermally expandable compound, the resin composition preferably further comprises at least one selected from the group consisting of an expandable flame retardant and a thermally expandable graphite in order to provide a proper refractory performance.

The expansion onset temperature of the thermally expandable compound is preferably 100 to 250°C. When the expansion onset temperature is equal to or higher than the above-described lower limit, the thermally expandable refractory material can be prevented from accidentally expanding except when fires occur. When the expansion onset temperature is equal to or lower than 250°C, the thermally expandable refractory material can expand rapidly on the occurrence of fires, leading to an increase in refractory performance and fire-extinguishing performance. From these viewpoints, the expansion onset temperature is more preferably 125 to 200°C, still more preferably 150 to 195°C and even more preferably 155 to 190°C.

The thermally expandable compound having such an expansion onset temperature as described above preferably includes a thermally expandable graphite. Therefore, the expansion onset temperature of the thermally expandable graphite is preferably 100 to 250°C, more preferably 125 to 200°C, still more preferably 150 to 195°C and even more preferably 155 to 190°C.

When the resin composition comprises two or more thermally expandable compounds, the expansion onset temperature of at least one of the thermally expandable compounds should be within the above range, but the thermally expandable compound having the lowest expansion onset temperature preferably has an expansion onset temperature within the above range. For example, when the thermally expandable compound comprises a thermally expandable graphite and an expandable flame retardant, the expansion onset temperature of the thermally expandable graphite is lower than the expansion onset temperature of the expandable flame retardant. Therefore, as described above, the expansion onset temperature of the thermally expandable graphite should be within the above range.

The expansion onset temperature is a value obtained with a rheometer by heating the thermally expandable compound and measuring the temperature at which the normal direction force begins to rise. In this case, the heating rate may be 10°C /min. The rheometer to be used can be the "Discovery HR2" manufactured by TA Instruments, or the like. The expansion onset temperature of the thermally decomposable foaming agent is generally not detected by the above measurement method, but the temperature at which it decomposes to generate a gas (decomposition temperature) should be within the above temperature range.

The content of the thermally expandable compound is preferably 10 to 80% by mass based on the total amount of the resin composition. When the resin composition comprises the thermally expandable compound at a content of not less than the above lower limit, it is sufficiently increased in expansion ratio during combustion, so that it is enhanced in refractory performance. On the other hand, when the resin composition comprises the thermally expandable compound at a content of not more than the above upper limit, it can comprise a thermoplastic resin at a content of not less than a certain level, so that good adhesion can be easily developed. In addition, after solidification, the thermally expandable compound is easy to be properly retained by the thermoplastic resin or the like, so that the resin composition (thermally expandable refractory material) is also enhanced in mechanical strength or the like.

The content of the thermally expandable compound in the resin composition is more preferably 15 to 70% by mass, still more preferably 20 to 60% by mass, and even more preferably 25 to 55% by mass.

In addition, from the same viewpoint as above, the content of the thermally expandable compound, expressed in parts by mass, is preferably 10 to 300 parts by mass, more preferably 25 to 200 parts by mass, still more preferably 40 to 150 parts by mass, and even more preferably 60 to 120 parts by mass, with respect to 100 parts by mass of the total of the thermoplastic resin and the tackifying resin.

In the present specification, when the resin composition does not comprise a tackifying resin, 100 parts by mass of the total of the thermoplastic resin and the tackifying resin means 100 parts by mass of the thermoplastic resin.

Among the above thermally expandable compounds, it is preferable to use at least one of the thermally expandable graphite and the expandable flame retardant. The use of the thermally expandable graphite and/or the expandable fire retardant as a thermally expandable compound provides the thermally expandable refractory material with fire retardancy, making it easier to be enhanced in refractory performance.

It is more preferable to use at least thermally expandable graphite as a thermally expandable compound. The use of the thermally expandable graphite makes it easier to adjust the expansion onset temperature within the above range and to increase the expansion ratio and residue hardness.

The content of thermally expandable graphite is preferably 50 to 60% by mass based on the total amount of the resin composition. When the resin composition comprises the thermally expandable graphite at a content of not less than the above lower limit, it makes it easier to be high in expansion ratio and residue hardness, so that the resin composition is enhanced in refractory performance. On the other hand, when the resin composition comprises the thermally expandable graphite at a content of not more than the above upper limit, it can comprise a component other than the thermally expandable graphite such as a thermoplastic resin or an expandable flame retardant at a content of not less than a certain level, so that the thermally expandable refractory material can be easily enhanced in various performances.

The content of the thermally expandable graphite in the resin composition is more preferably 7 to 50% by mass, still more preferably 10 to 40% by mass, and even more preferably 15 to 30% by mass, based on the total amount of the resin composition.

In addition, from the same viewpoint as above, the content of the thermally graphite, expressed in parts by mass, is preferably 5 to 180 parts by mass, more preferably 10 to 140 parts by mass, still more preferably 20 to 100 parts by mass, and even more preferably 30 to 80 parts by mass, with respect to 100 parts by mass of the total of the thermoplastic resin and the tackifying resin.

It is also preferable to use a thermally expandable graphite and an expandable flame retardant in combination as a thermally expandable compound. The content of the thermally expandable graphite when using these in combination is as described above. The content of the expandable fire retardant is preferably 3 to 70% by mass based on the total amount of the resin composition. When the resin composition comprises the expandable flame retardant at a content of not less than the above lower limit, it can be easily increased in expansion ratio and residue hardness, so that the resin composition is enhanced in refractory performance. On the other hand, when the resin composition comprises the expandable flame retardant at a content of not more than the above upper limit, it can comprise a component other than the expandable flame retardant, such as a thermoplastic resin or a thermally expandable graphite, at a content of not less than a certain level, so that the resin composition is enhanced in various performances.

The content of the expandable flame retardant is more preferably 5 to 50% by mass, still more preferably 10 to 40% by mass, and even more preferably 10 to 30% by mass.

From the same viewpoint as above, the content of the expandable flame retardant, expressed in parts by mass, is preferably 5 to 140 parts by mass, more preferably 10 to 100 parts by mass, still more preferably 15 to 80 parts by mass, and even more preferably 20 to 70 parts by mass, with respect to 100 parts by mass of the total of the thermoplastic resin and the tackifying resin.

When the thermally expandable graphite and the expandable flame retardant are used in combination, the mass ratio of the content of the expandable flame retardant to the thermally expandable graphite in the resin composition (expandable flame retardant/thermally expandable graphite) is preferably 0.1 to 10. When the resin composition has the content ratio by mass in the above range, it can be easily increased in expansion ratio and residue hardness, so that the resin composition is enhanced in refractory performance. From these viewpoints, the content ratio is more preferably 0.2 to 4, still more preferably 0.4 to 2, and even more preferably 0.5 to 1.5.

### [Tackifying resin]

The resin composition preferably comprises a tackifying resin. Examples of the tackifying resin include a rosin-based tackifying resin, a terpene-based tackifying resin, a petroleum resin-based tackifying resin, and a coumarone resin-based tackifying resin.

Examples of the rosin-based tackifying resin include a gum rosin, a wood rosin, a polymerized rosin, a disproportionated rosin, a hydrogenated rosin, a dimerized rosin; an ester of the above rosin with pentaerythritol, glycerin, diethylene glycol or the like (a rosin ester); and a rosin-phenolic resin.

Examples of the terpene-based tackifying resin include a terpene resin, a copolymer of terpene and styrene, a copolymer of terpene and α-methylstyrene and a copolymer of terpene and phenol, and a hydrogenated product thereof.

Examples of the petroleum resin-based tackifying resin include an aliphatic petroleum resin, an alicyclic petroleum resin, an aromatic petroleum resin, an aliphatic-aromatic copolymer petroleum resin, and a hydrogenated product thereof.

The petroleum resin-based tackifying resin is preferably a non-hydrogenated C9 petroleum resin. The term "non-hydrogenated C9 petroleum resin" refers to a resin which is obtained by (co)polymerizing the C9 to C10 fractions, i.e., aromatic fractions contained in the cracked petroleum fraction produced as a by-product in steam cracking of petroleum and which has not been hydrogenated. These non-hydrogenated C9 petroleum resins may be used alone or in combination of two or more thereof. The term "(co)polymerization" means homopolymerization or copolymerization. Examples of the C9 to C10 fractions (aromatic fractions) include, but are not particularly limited to, vinyl aromatic hydrocarbons such as vinyl toluene, indene, styrene or α-methylstyrene.

Examples of the coumarone resin-based tackifying resin include a coumarone resin and coumarone-indene resin. In addition to the above, a xylene resin can also be used as a tackifying resin. Among the above-described tackifying resins, a petroleum-based tackifying resin and a rosin-based tackifying resin are preferred. The above tackifying resins may be used alone or in combination of two or more thereof.

The softening point of the tackifying resin is, but not particularly limited, for example, 90 to 150°C, preferably 100 to 140°C, and more preferably 110 to 130°C. When the resin composition has a softening point within the above range, it can be enhanced in adhesion, coatability, strength after solidification, and the like in a balanced manner. The softening point is a softening temperature as measured by a ring-and-ball method in accordance with JISK2207.

When the thermoplastic resin comprises a tackifying resin, the content of the tackifying resin in the resin composition is preferably 10 to 250 parts by mass with respect to 100 parts by mass of the thermoplastic resin. When the content of the tackifying resin is 10 parts by mass or more, the resin composition can be enhanced in adhesion by the tackifying resin. On the other hand, when the content of the tackifying resin is 250 parts by mass or less, the resin composition can be prevented from being impaired in strength or the like, by the tackifying resin. The content of the tackifying resin is more preferably 25 to 150 parts by mass and still more preferably 40 to 100 parts by mass, with respect to 100 parts by mass of the thermoplastic resin.

### [Wax]

The resin composition of the present invention preferably comprises a wax.
When the resin composition of the present invention comprises a wax, it can be enhanced in the solidification rate and can be suitably used in line production. In addition, when the resin composition of the present invention comprises a wax, it can be suppressed in sagging caused by long-term wet heat at a temperature of not more than the melting point of the wax. Furthermore, the wax can decrease the viscosity of the resin composition when melted, and it can easily enhance the coatability of the resin composition.

The melting point of the wax is preferably more than the melting point of the thermoplastic resin, and specifically, it is preferably 90°C or more, more preferably 95°C or more, and still more preferably 100°C or more. When the melting point of the wax is not less than a certain level, the resin composition can be properly prevented from dripping after coated. From the viewpoint of easily providing a certain level of flowability to the resin composition by heating during coating, the melting point of the wax is, for example, 160°C or less, preferably 140°C or less, and more preferably 120°C or less. The melting point is a value measured in accordance with JIS K-7121. Specifically, the melting point of the wax is as measured with a differential scanning calorimeter commercially available from Shimadzu Corporation under the trade name "DSC-60" when the wax is heated from 30°C to 150°C at a heating rate of 5°C /min.

The wax to be used may be a wax that has crystallinity and good compatibility with a thermoplastic resin. Specific examples of the wax include a synthetic wax such as a Fischer-Tropsch wax or a polyethylene wax; a paraffin-based wax such as refined paraffin wax; and a natural wax such as a microcrystalline wax. The wax is preferably a synthetic wax, and more preferably a Fischer-Tropsch wax among them. The Fischer-Tropsch wax has a high proportion of saturated linear hydrocarbons and a narrow carbon number distribution. Therefore, it is easily increased in the melting point while it is easily decreased in the viscosity when melted, so that it is easily decreased in the kinematic viscosity at 160°C as described above. The waxes may be used alone or in combination of two or more thereof.

The content of the wax in the resin composition is preferably 0.5 parts by mass or more and 15 parts by mass or less with respect to 100 parts by mass of the total of the thermoplastic resin and the tackifying resin. When the content of the wax is equal to or more than the above lower limit, the resin composition can be properly prevented from flowing at a low temperature. On the other hand, when the content of the wax is equal to or less than the above upper limit, the resin composition can easily exhibit the effect of the formulated wax without decreasing the performances such as adhesion. The content of the wax in the resin composition is preferably 1 part by mass or more and 10 parts by mass or less, more preferably 1.5 parts by mass or more and 7 parts by mass or less, and still more preferably 2 parts by mass or more and 4 parts by mass or less.

### [Reactive component]

The resin composition of the present invention preferably comprises a reactive component. Examples of the reactive component include a thermosetting component and a moisture-curable component.

### (Thermosetting component)

The thermosetting component is preferably a component that cures when heated in the event of fire (for example, when heated to 200°C or more, and generally, when heated to about 200 to 900°C). When the resin composition of the present invention comprises a thermosetting component, it cures when heated in the event of fire and is less likely to drip and can easily exhibit a higher effect of suppressing the spread of fire.

The thermosetting component to be used is preferably a component with a relatively high temperature at which it reacts and start curing (curing onset temperature), and for example, a component that starts curing at a temperature of about 150°C or more is preferred.

In the above viscosity measurement at 160°C, since the thermosetting component is only heated for a short period of time, even when the thermosetting component cures, the thermosetting component that cures is small in amount and has small influence on the viscosity, but it may have some influence on the viscosity.

Examples of the thermosetting component include a silicone resin, an organopolysiloxane other than a silicone resin, and a thermosetting resin such as an epoxy resin or a phenol resin. The thermosetting components may be used alone or in combination of two or more thereof.

Among the above, the thermosetting component is preferably a silicone resin or an epoxy resin, and more preferably a silicone resin. In the present invention, when a silicone resin is used, the curing of the thermosetting component is hardly advanced due to heating during coating, while it can be easily advanced due to heating in the event of fire. Therefore, the resin composition does not lose the flowability during coating and is enhanced in workability, while it does not drip in the event of fire and can be easily enhanced in the effect of suppressing the spread of fire. In addition, as described below, the silicone resin has a three-dimensional network structure, which makes it easier to increase the Ti value and also the static viscosity at 160°C.

The silicone resin has at least a trifunctional structural unit referred to as a T unit. The silicone resin, which has a trifunctional structural unit, has a three-dimensional network structure. The silicone resin typically also has a bifunctional structural unit referred to as a D unit, and may further have a monofunctional structural unit referred to as an M unit or a tetrafunctional structural unit referred to as a Q unit, as necessary.

In addition, the silicone resin has a reactive group such as a silanol group, a polymerizable double bond or a hydrosilyl group, and preferably has a silanol group as a reactive group. The silanol group is a structural unit described below in which R is a hydroxyl group. When the silicone resin has a silanol group, the silanol groups react with each other by dehydration condensation when heated, resulting in curing. The polymerizable double bond is to undergo an addition reaction with a hydrosilyl group, and examples thereof include a vinyl group and a (meth)acryloyl group. Therefore, the silicone resin having a polymerizable double bond and one having a hydrosilyl group may be used in combination.

The trifunctional structural unit is a structural unit represented by RSiO_{3/2}, the bifunctional structural unit is a structural unit represented by R₂SiO_{2/2}, the monofunctional structural unit is a structural unit represented by R₃SiO_{1/2}, and the tetrafunctional structural unit is a structural unit represented by SiO_{4/2}. In these structural units, the letter of R is a substituted or unsubstituted monovalent hydrocarbon group, or an organic group such as a reactive functional group.

Examples of the substituted or unsubstituted monovalent hydrocarbon group include a substituted or unsubstituted monovalent hydrocarbon group having no aliphatic unsaturated bond such as one having about 1 to 18 carbon atoms. Specific examples thereof include an alkyl group such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group or a dodecyl group; a cycloalkyl group such as a cyclohexyl group; an aryl group such as a phenyl group, a tolyl group, a xylyl group, a naphthyl group or a biphenylyl group; an aralkyl group such as a benzyl group, a phenylethyl group, a phenylpropyl group or a methylbenzyl group; and such a group in which some or all of the hydrogen atoms bonded to the carbon atoms thereof are substituted with a halogen atom such as fluorine, chlorine or bromine, or a cyano group. Among these, an alkyl group having 1 to 8 carbon atoms and a phenyl group are preferred, and among them, a methyl group and a phenyl group are more preferred, and in a silicone resin, still more preferred is the combined use of a methyl group and a phenyl group as the letter of R. When the silicone resin has a phenyl group, it can be easily enhanced in compatibility with a thermoplastic resin. That is, a methyl/phenyl-based silicone resin is preferably as a silicone resin.

Examples of the reactive functional group include a hydroxyl group, a polymerizable double bond and a hydrosilyl group, and a hydroxyl group is preferred among them.

Examples of the epoxy resin include a styrene skeleton-containing epoxy resin, a resorcinol-type epoxy resin, a bisphenol A-type epoxy resin, a bisphenol F-type epoxy resin, a bisphenol S-type epoxy resin, a phenol novolac-type epoxy resin, a biphenol-type epoxy resin, a phenoxy-type epoxy resin, a naphthalene-type epoxy resin, a biphenyl-type epoxy resin, a phenylene ether-type epoxy resin, a fluorene-type epoxy resin, a phenol aralkyl-type epoxy resin, a naphthol aralkyl-type epoxy resin, a dicyclopentadiene-type epoxy resin, an anthracene-type epoxy resin, an epoxy resin having a mesogen skeleton, an epoxy resin having an adamantane skeleton, an epoxy resin having a tricyclodecane skeleton, an epoxy resin having a triazine nucleus, and a glycidylamine-type epoxy resin. Among them, preferred are a bisphenol-type epoxy resin such as a bisphenol A-type epoxy resin or a bisphenol F-type epoxy resin. The epoxy resin may be a solid type that is solid at an ordinary temperature, or a liquid type that is liquid at an ordinary temperature.

### (Moisture-curable component)

The moisture-curable component is preferably a polymer having a crosslinkable hydrolyzable silyl group (moisture-curable resin). When the resin composition of the present invention comprises a moisture-curable component, the crosslinkable hydrolyzable silyl group is hydrolyzed by the moisture in the atmosphere followed by dehydration condensation, which makes it less likely to drip.

The moisture-curable component comprises a polymer (X) having a moisture-curable functional group. Among the above, the polymer (X) is preferably a crosslinkable silyl group-containing polymer. The crosslinkable silyl group in the crosslinkable silyl group-containing polymer is a moisture-curable functional group, specifically a functional group represented by the following formula (1). The number of crosslinkable silyl groups in the crosslinkable silyl group-containing polymer is not particularly limited as long as the number is one or more in one molecule, but for example, it is preferably about 1 to 5, and more preferably about 2 to 4.

-SR¹ₐX₃₋ₐ (1)

Wherein, the letter of R¹ is a hydrocarbon group, preferably an alkyl group having 1 to 20 carbon atoms, an aryl group having 6 to 20 carbon atoms or an aralkyl group having 7 to 20 carbon atoms, and more preferably an alkyl group having 1 to 4 carbon atoms. The letter of X represents a reactive group, and the reactive group represented by the letter of X are a group selected from the group consisting of a halogen atom, a hydrogen atom, a hydroxyl group, an alkoxy group, an acyloxy group, a ketoximate group, an amide group, an acid amide group, a mercapto group, a ketoxime group, an alkenyloxy group and an aminooxy group, and when the number of X is two or more, X may be the same group or different groups. Among them, X is preferably an alkoxy group or a ketoxime group, and more preferably an alkoxy group. The letter of a is an integer of 0, 1 or 2, and more preferably 0 or 1.

The alkoxy group is preferably an alkoxy group having 1 to 4 carbons. Specific examples thereof include a methoxy group, an ethoxy group, an n-propoxy group, an isopropoxy group, an n-butoxy group, a sec-butoxy group and a tert-butoxy group. Among these, a methoxy group and an ethoxy group are preferred, and a methoxy group is most preferred.

Examples of the crosslinkable silyl group-containing polymer include a crosslinkable silyl group-containing polyoxyalkylene-based polymer, a crosslinkable silyl group-containing acrylic-based polymer, a crosslinkable silyl group-containing acrylic-modified polyoxyalkylene-based polymer, a silylated urethane, and a crosslinkable silyl group-containing silicone resin.

### [Silanol condensation catalyst]

The resin composition comprising a polymer having a crosslinkable hydrolyzable silyl group preferably comprises a silanol condensation catalyst. The silanol condensation catalyst is a catalyst for promoting the dehydration condensation reaction between silanol groups formed by hydrolysis of hydrolyzable silyl groups contained in a polymer having hydrolyzable silyl groups.

Examples of the silanol condensation catalyst include an organotin-based compound such as 1,1,3,3-tetrabutyl-1,3-dilauryloxycarbonyl-distannoxane, dibutyltin dilaurate, dibutyltin oxide, dibutyltin diacetate, dibutyltin phthalate, bis(dibutyltin laurate)oxide, dibutyltin bis(acetylacetonate), dibutyltin bis(monoester malate), tin octoate, dibutyltin octoate, dioctyltin oxide, dibutyltin bis(triethoxysilicate), bis(dibutyltin bistriethoxysilicate)oxide or dibutyltin oxybisethoxysilicate; an organotitanium-based compound such as tetra-n-butoxytitanate or tetraisopropoxytitanate; a metal such as aluminum, potassium or bismuth; an organic acid metal salt such as aluminum octylate, aluminum 2-ethylhexanoate, aluminum neononanoate, aluminum neodecanoate, potassium octylate, potassium 2-ethylhexanoate, potassium neononanoate, potassium neodecanoate, bismuth octylate, bismuth 2-ethylhexanoate, bismuth neononanoate or bismuth neodecanoate; and an aminosilane coupling agent such as 3-aminopropyltrimethoxysilane, 3-aminopropylmethyldimethoxysilane, 3-aminopropyltriethoxysilane, N-(2-aminoethyl)-3-aminopropyltrimethoxysilane, N-(2-aminoethyl)-3-aminopropyltriethoxysilane, N,N'-bis-[3-(trimethoxysilyl)propyl]ethylenediamine, N,N'-bis-[3-(triethoxysilyl)propyl]ethylenediamine, N,N'-bis-[3-(methyldimethoxysilyl)propyl]ethylenediamine, N,N'-bis-[3-(trimethoxysilyl)propyl]hexamethylenediamine or N,N'-bis-[3-(triethoxysilyl)propyl]hexamethylenediamine.

These silanol condensation catalyst may be used alone or in combination of two or more thereof.

The silanol condensation catalyst used for the thermoplastic resin comprising a polymer having a crosslinkable hydrolyzable silyl group is preferably an organic acid metal salt or an aminosilane coupling agent, more preferably an aluminum organic acid metal salt or an aminosilane coupling agent, and particularly preferably an aminosilane coupling agent, from the viewpoint of being able to suppress the reaction even in a heated state.

The content of the silanol condensation catalyst in the curable composition is preferably 0.01 to 5 parts by mass and more preferably 0.1 to 3 parts by mass, with respect to 100 parts by mass of the polymer having a hydrolyzable silyl group. When the content of the silanol condensation catalyst is 0.01 parts by mass or more, the curing rate of the curable composition can be increased, and the time required for curing the curable composition can be reduced. On the other hand, when the content of the silanol condensation catalyst is 5 parts by mass or less, the curable composition can have an appropriate curing rate, and can be enhanced in storage stability and handleability.

The moisture-curable component may be an isocyanate group-containing resin. The isocyanate group-containing resin cures when the isocyanate group in the molecule reacts with water present in the atmosphere or the like. The isocyanate group-containing resin may have only one isocyanate group or two or more isocyanate groups in one molecule, but it preferably has isocyanate groups at both ends of the main chain of the molecule.

The isocyanate group-containing resin is preferably a moisture-curable urethane resin having a urethane bond in addition to an isocyanate group. Examples of the moisture-curable urethane resin include a reaction product between a polyol compound having two or more hydroxyl groups in one molecule and a polyisocyanate compound having two or more isocyanate groups in one molecule. Examples of the polyol compound include a polycarbonate polyol, a polyester polyol and a polyether polyol, and among these, a polyester polyol and a polyether polyol are preferred. The polyol compounds may be used alone or in combination of two or more thereof. The polyisocyanate compound may be an aromatic polyisocyanate compound such as diphenylmethane diisocyanate, or an aliphatic polyisocyanate compound.

The content of the reactive component is preferably 0.1 parts by mass or more and 60 parts by mass or less with respect to 100 parts by mass of the total of the thermoplastic resin and the tackifying resin. When the content of the reactive component is equal to or more than the above lower limit, the resin composition can be appropriately prevented from dripping in the event of fire and can be easily enhanced in the effect of suppressing the spread of fire. When the content of the reactive component is equal to or less than the above upper limit, the resin composition can be easily prevented from decreasing in various performances such as adhesion. The above content of the reactive component is more preferably 1 part by mass or more and 50 parts by mass or less, still more preferably 2 parts by mass or more and 45 parts by mass or less, even more preferably 3 parts by mass or more and 40 parts by mass or less, and most preferably 5 parts by mass or more and 35 parts by mass or less.

### [Thixotropic agent]

The resin composition of the present invention preferably comprises a thixotropic agent. When the resin composition of the present invention comprises a thixotropic agent, it is increased in TI value and can be easily increased in the static viscosity at 160°C.

Examples of the thixotropic agent include an inorganic particle such as a calcium carbonate particle, clay, a silica particle, a kaolin particle, a glass fiber, or a needle-like filler other than these; and an organic thixotropic agent such as amide.

The thixotropic agents may be used alone or in combination of two or more thereof.

Among the above, the thixotropic agent is preferably a calcium carbonate particle, amide, fumed silica or a glass fiber, and among them, more preferably a calcium carbonate particle. The calcium carbonate particle may be either colloidal calcium carbonate or heavy calcium carbonate, but it is preferably colloidal calcium carbonate. The colloidal calcium carbonate has a small and uniform particle size, so that the resin composition can be easily provided with a stably high thickening effect. The surface-treated calcium carbonate particle is preferred, and specifically, a calcium carbonate particle surface-treated with a fatty acid are preferred. Therefore, the calcium carbonate particle is more preferably colloidal calcium carbonate surface-treated with a fatty acid.

The clay, which is a powdered material derived from a natural ore containing aluminum silicate hydrate as its main component, may be appropriately surface-treated. The clay to be used is preferably a product with the trade name "GARAMITE".

The silica particle is preferably fumed silica, as described above. The fumed silica that can be used is a product with the trade name "AEROSIL".

The thixotropic agent may be appropriately added so that the static viscosity at 160°C and the TI value are within the above-described range, and the content of the thixotropic agent is preferably 10 to 100 parts by mass with respect to 100 parts by mass of the total of the thermoplastic resin and the tackifying resin. When the content of the thixotropic agent is equal to or more than the above lower limit, the resin composition is easy to be properly enhanced in the static viscosity at 160°C and the TI value. When the content of the thixotropic agent is 100 parts by mass or less, the resin composition can be prevented from being decreased in various performances such as adhesion. The content of the thixotropic agent is more preferably 15 to 90 parts by mass, still more preferably 20 to 80 parts by mass, and even more preferably 30 to 60 parts by mass.

The resin composition of the present invention is preferably used as a thermally expandable refractory material, and preferably comprises a thermoplastic resin and a thermally expandable compound. It preferably comprises, in addition to the thermoplastic resin and the thermally expandable compound, at least one of a tackifying resin, a wax, a reactive component and a thixotropic agent. Therefore, the resin composition of the present invention preferably comprises each component in any of the combinations shown below in (A) to (O):
(A) A thermoplastic resin, a thermally expandable compound and a tackifying resin;
(B) a thermoplastic resin, a thermally expandable compound and a wax;
(C) a thermoplastic resin, a thermally expandable compound and a reactive component;
(D) a thermoplastic resin, a thermally expandable compound and a thixotropic agent;
(E) a thermoplastic resin, a thermally expandable compound, a tackifying resin and a wax;
(F) a thermoplastic resin, a thermally expandable compound, a tackifying resin and a reactive component;
(G) a thermoplastic resin, a thermally expandable compound, a tackifying resin and a thixotropic agent;
(H) a thermoplastic resin, a thermally expandable compound, a wax and a reactive component;
(I) a thermoplastic resin, a thermally expandable compound, a wax and a thixotropic agent;
(J) a thermoplastic resin, a thermally expandable compound, a reactive component and a thixotropic agent;
(K) a thermoplastic resin, a thermally expandable compound, a tackifying resin, a wax and a reactive component;
(L) a thermoplastic resin, a thermally expandable compound, a tackifying resin, a wax and a thixotropic agent;
(M) a thermoplastic resin, a thermally expandable compound, a tackifying resin, a reactive component and a thixotropic agent;
(N) a thermoplastic resin, a thermally expandable compound, a wax, a reactive component and a thixotropic agent; or
(O) a thermoplastic resin, a thermally expandable compound, a tackifying resin, a wax, a reactive component and a thixotropic agent.

### [Other components]

The resin composition of the present invention may comprise an antioxidant. Examples of the antioxidant include a phenolic compound, a phosphoric acid compound and a sulfur compound. The antioxidant prevents oxidative deterioration of the resin composition, thereby enhancing durability of the resin composition. Among the above, the phenolic compound is preferred from the viewpoint of enhancing durability.

Examples of the above phenolic compound include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5- t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, and bis(3,3'-t-butylphenol)butyric acid glycol ester and pentaerythritol tetrakis[3-(3,5-di-tert-butyl-4-hydroxyphenyl)propionate].

Examples of the above phosphoric acid compound include trisnonylphenyl phosphite, tridecyl phosphite, 2-ethyl-2-butylpropylene-4,6-tri-tert-butylphenol phosphite, 9,10-dihydro-9-oxa-10-phosphaphenanthrene, tetra(tridecyl)isopropylidenediphenol diphosphite, and tris[2-tert-butyl-4-(3-tert-hydroxy-5-methylphenylthio)-5-methylphenyl]phosphite.

Examples of the above sulfur compound include a dialkyl thiodipropionate such as dilauryl thiodipropionate, dimyristyl thiodipropionate or distearyl thiodipropionate; and a polyol β-alkyl mercaptopropionate such as pentaerythritol tetra(β-dodecyl mercaptopropionate).

The antioxidants may be used alone or in combination of two or more thereof.

The content of the antioxidant in the resin composition is preferably 0.01 to 3 parts by mass, and more preferably 0.04 to 2 parts by mass, and still more preferably 0.06 to 1.5 parts by mass, with respect to 100 parts by mass of the total of the thermoplastic resin and the tackifying resin.

The resin composition of the present invention may comprise an inorganic filler other than the above-described thermally expandable compound and thixotropic agent. The inorganic filler, when heated to form an expansion heat insulating layer, increases the heat capacity and suppresses the heat transfer, while acting acts like an aggregate to enhance the strength of expansion residues. The resin composition of the present invention may also comprise a flame retardant other than the above-described expandable flame retardant. Such flame retardants include a phosphate ester compound.

The resin composition of the present invention may also comprise, in addition to the above, an additive such as a catalyst for promoting the curing of a thermosetting component, a curing agent, a plasticizer, a lubricant, an anti-shrinking agent, a crystal nucleating agent, a colorant (such as a pigment or a dye), an ultraviolet absorber, an anti-aging agent, a flame retardant aid, an antistatic agent, a surfactant, a vulcanizing agent, a dispersant or a surface treatment agent. These additives may be used alone or in combination of two or more thereof.

The curing agent to be used may be any known curing agent. For example, when the thermosetting component is an epoxy resin, examples of the curing agent include a phenolic thermal curing agent, an amine thermal curing agent such as dicyandiamide, an imidazolebased curing agent, and an acid anhydride-based curing agent.

### (Method for producing resin composition)

The resin composition of the present invention can be obtained by mixing a thermoplastic resin with various components which are formulated as necessary, for example, one or more components selected from a thermally expandable compound, a tackifying resin, a wax, a reactive component, a thixotropic agent and other components. In this case, the thermoplastic resin is preferably heated to about the temperature at which it can melt, followed by mixing it with each component. However, the heating temperature is preferably less than the expansion onset temperature of a thermally expandable compound when it is mixed with the thermally expandable compound, and it is preferably less than the curing onset temperature of a thermosetting component when it is mixed with the thermosetting component as a reactive component.

### <Method for using resin composition>

The resin composition of the present invention is a hot-melt type resin composition as described above. This resin composition is preferably melted by heating, and it is preferably applied to the object to be applied by coating the object to be applied with the molten resin composition and solidifying the coated resin composition.

The process of coating the object to be applied with thethermally expandable is not particularly limited. It may be a process of coating the object to be applied by brushing or spraying, but it is preferably a process of mechanically coating with any known coating device. In a preferred embodiment, the resin composition of the present invention has a low kinematic viscosity at 160°C, and it can be easily subjected to continuous mechanical coating.

On the other hand, in cases such as when the reactive component comprises a moisture-curable component, the resin composition may be further cured by solidifying it followed by allowing it to stand.

When the resin composition is melted during coating as described above, the temperature thereof is, for example, 120 to 200°C, preferably 130 to 180°C, and more preferably 140 to 170°C. When the resin composition comprises a thermally expandable compound, it is preferably heated to a temperature of less than the expansion onset temperature of the thermally expandable compound.

The process of solidifying the resin composition coated on the object to be applied is not particularly limited, but the resin composition can be solidified by allowing it to stand at room temperature or the like.

The resin composition is preferably coated and solidified as described above to form a film or sheet on the object to be applied. The resin composition formed into a film or sheet on the object to be applied is preferably used as a thermally expandable refractory material.

The resin composition of the present invention may also be formed into a film or sheet on a substrate by coating or the like, then peeled from the substrate, and used as it is in the form of film or sheet.

The thickness of the resin composition formed into a film or sheet (such as a thermally expandable refractory material) is not particularly limited, but is, for example, 0.1 to 20 mm, preferably 0.3 to 10 mm, and more preferably 0.5 to 5 mm.

The resin composition of the present invention may be used, for example, as a thermally expandable refractory material, in various buildings such as detached houses, collective housings, high-rise housings, high-rise buildings, commercial facilities and public facilities; various vehicles such as automobiles and trains; ships, aircraft, and electronic devices. Among these, it is preferably used for building applications.

For the buildings, for example, the resin composition is applied by coating on fittings such as windows, Shojis, doors, sliding doors and Fusumas, and construction materials other than fittings, such as walls, beams, pillars, floors, bricks, roofs, plate materials, piping and wiring. For the fittings, for example, the resin composition can be coated on the sash and solidified to provide a fireproof sash having a thermally expandable refractory material coated. It can also be used by coating it on the outer walls of buildings, or the like.

For a battery case, an electronic device such as a smartphone or the like, the resin composition of the present invention can be used by coating it on the surface of the battery case such as that for a lithium-ion battery, a cover material of the electronic device or the like. When the resin composition of the present invention is used in the electronic device, it can prevent fires from occurring even when a battery such as a lithium-ion battery exhibits thermal runaway.

The resin composition of the present invention can also be used as an adhesive and may be used to cause each of parts to adhere to each other in various buildings, various vehicles such as automobiles and trains, ships, aircraft, electronic devices or the like. It may also be used as a packing for providing a sealing between parts in various buildings, various vehicles such as trains and automobiles, ships, aircraft, electronic devices or the like. In particular, when used as an adhesive, packing or the like around a battery such as a lithium-ion battery in an electric vehicle or an electronic device such as a smartphone, it can suppress fires that would occur when the battery such as a lithium-ion battery would exhibit thermal runaway, so that it is effective. For the ships, it may be used as an adhesive, a watertight material or the like for parts of the ships that are regulated for fire protection.

The above description was based on the assumption that the resin composition would be coated. However, the resin composition may also be used by other means than coating, and it may be used, for example, by filling gaps or the like in an object to be applied.

### Examples

Hereinafter, the present invention will be described more specifically with reference to examples, but the present invention is not limited thereto.

Components used in Examples and Comparative Examples are as follows.

### (Thermoplastic resin)

- EVA: an ethylene-vinyl acetate copolymer resin, "Ultrasen 726", manufactured by Tosoh Corporation; vinyl acetate content: 33% by mass; melt flow rate: 700 g/10 min (190°C, load: 21.2 N); a thermoplastic resin that is solid at an ordinary temperature and is flowable at a temperature of 160°C; melting point: 65°C

### (Tackifying resin)

- Non-hydrogenated C9 petroleum resin (an aromatic petroleum resin), "Petcol 120", manufactured by Tosoh Corporation; glass transition temperature (Tg): 120°C; softening point: 120°C
- Fischer-Tropsch wax, "FT-105", manufactured by NIPPON SEIRO CO., LTD.; melting point: 105°C

### (Antioxidant)

- Phenolic antioxidant, pentaerythritol tetrakis[3-(3,5-di-tert-butyl-4-hydroxyphenyl)propionate], "Irganox 1010", manufactured by BASF

### (Thermosetting component)

- Silicone resin: "KR-480", manufactured by Shin-Etsu Chemical Co., Ltd.
- Bisphenol A-type epoxy resin 1: "YD-014", manufactured by Nippon Steel Chemical Co., Ltd.; solid at an ordinary temperature
- Bisphenol A-type epoxy resin 2: "EPIKOTE 828", manufactured by Japan Epoxy Resins Co., Ltd.; epoxy equivalent: 189g/eq; liquid at an ordinary temperature
- Dicyandiamide

### (Moisture-curable component)

- Moisture-curable adhesive: a moisture-curable adhesive prepared by the method described below is used.
- Si-containing PPG polymer: "MS Polymer S303", manufactured by KANEKA CORPORATION; a polyalkylene oxide which comprises a polypropylene oxide as a main chain skeleton and a propyldimethoxysilyl group at the terminal of the main chain; linear; number-average molecular weight: 20,000
- Coupling agent: "KBM-603", manufactured by Shin-Etsu Chemical Co., Ltd.; N-(2-aminoethyl)-3-aminopropyltrimethoxysilane

### (Thixotropic agent)

- Calcium carbonate: "K-200M", manufactured by MARUO CALCIUM CO., LTD.; colloidal calcium carbonate surface-treated with a fatty acid

### (Thermally expandable compound)

- Thermally expandable graphite: "ADT351", manufactured by ADT Co., Ltd.; expansion onset temperature:180°C
- Expandable flame retardant; aluminum phosphite: "APA100", manufactured by Taihei Chemical Industrial Co., Ltd.

### (Preparation of the moisture-curable adhesive)

A highly crystalline polyester polyol (A), an amorphous polyester polyol (B) and polyether polyols (C1) and (C2) as polyol compounds, in the formulation amounts shown in Table 1, were charged into a 1-liter four-necked flask with a stirring blade, and melted by heating to 120°C to obtain a molten mixture. The molten mixture was dehydrated by reducing the pressure to 1 mmHg or less, and it was cooled to the temperature of 80°C after purging the flask with nitrogen gas. Then, 4,4'-diphenylmethane diisocyanate was charged into the flask as a polyisocyanate compound in the formulation amount shown in the table to provide a raw material composition, and this raw material composition was stirred for 3 hours under a nitrogen gas atmosphere. This allowed the polyol compound and the polyisocyanate compound to react to obtain a moisture-curable hot-melt adhesive comprising a urethane prepolymer terminated with an isocyanate group.

**[Table 1]**

| | | Moisture-curable hot-melt adhesive |
|---|---|---|
| Formulation (pars by mass) | Highly crystalline polyester polyol (A) | 25 |
| | Amorphous polyester polyol (B) | 25 |
| | Polyether polyol (C1) | 20 |
| | Polyether polyol (C2) | 10 |
| | Polyisocyanate compound | 20 |
| | Total | 100.0 |

• Highly crystalline polyester polyol (A): a highly crystalline polyester polyol obtained by condensation polymerization of sebacic acid (carbon number: 10) and hexanediol (carbon number: 6); hydroxyl value 12; number-average molecular weight: 10,000; endotherm: 25 cal/g; exothermic peak: 56°C, a product manufactured by HOKOKU CORPORATION; trade name "HS 2H-1000S"
- Amorphous polyester polyol (B): an amorphous polyester polyol (number-average molecular weight: 2000; a product manufactured by HOKOKU CORPORATION; trade name: "HS2F-237P")
- Polyether polyol (C1): a polypropylene glycol; number-average molecular weight: 2000; hydroxyl value: 56; a product manufactured by AGC Inc.; trade name: "EXCENOL 2020"
- Polyether polyol (C2): a polypropylene glycol adduct of bisphenol A; number-average molecular weight: 800; hydroxyl value: 142; a product manufactured by ADEKA CORPORATION; trade name: "BPX55"
- Polyisocyanate compound: 4,4'-diphenylmethane diisocyanate

### (Examples 1 to 13 and Comparative Example 1)

According to the formulation in Table 2, each component was uniformly heated, melted and kneaded at 130°C using a universal stirring kneader (model "25AMW type" manufactured by DALTON CORPORATION; mixing tool: a hook) to obtain a hot-melt type resin composition.

The measurement method and evaluation method for each of physical properties are as follows.

### (Viscosity)

The viscosity of the resin composition at 160°C was measured at 1 rpm and 10 rpm with a Brookfield B-type viscometer (BU8 type), and a thermosel and a spindle H-6. In this case, the resin composition was heated from room temperature (25°C) to 160°C for 30 minutes, and the viscosity was measured at each rotation speed after rotating for 30 minutes while maintaining the temperature at 160°C after heating.

### (Evaluation of dripping during heating)

The resin composition obtained in each of Examples and Comparative Example was heated to 150°C, and the heated resin composition was coated on a 70mm × 150mm iron plate in the center thereof in an area of 50 mm × 25 mm with a metal spatula to form a coated film (a thermally expandable refractory material) with a thickness of about 1.5mm on the iron plate. The iron plate having the coated film formed thereon was then subjected to aging for one month under conditions of room temperature of 23°C and humidity of 50%.

The iron plate having the coated film formed thereon was placed in a muffle furnace that had been previously kept at 200°C, heated for 10 minutes, and then removed from the muffle furnace. The iron plate was heated at 200°C for 10 minutes in a vertical position in the muffle furnace. The state of the thermally expandable refractory material at that time was evaluated according to the following evaluation criteria. The evaluation results are shown in Table 2.

In addition, the iron plate having the coated film formed thereon was heated at 300°C for 4 minutes instead of heating at 200°C for 10 minutes, and evaluated in the same manner. The evaluation results are shown in Table 2.

### <Evaluation criteria>

+++: No sagging occurred, and even when sagging occurred, the sagging width was less than 3 mm.
++: Sagging occurred, but the sagging width was 3 mm or more and less than 10 mm.
+: Sagging of 10 mm or more occurred.

**[Table 2]**

| | | | **Example 1** | **Example 2** | **Example 3** | **Example 4** | **Example 5** | **Example 6** | **Example 7** | **Example 8** | **Example 9** | **Example 10** | **Example 11** | **Example 12** | **Example 13** | **Comparative Example 1** |
|---|---|---|---|---|---|---|---|---|---|---|---|---|---|---|---|---|
| | EVA | | 70 | 70 | 70 | 70 | 70 | 70 | 70 | 70 | 70 | 70 | 70 | 70 | 70 | 70 |
| | Tackifying resin | | 30 | 30 | 30 | 30 | 30 | 30 | 30 | 30 | 30 | 30 | 30 | 30 | 30 | 30 |
| | Wax | | 7 | | 7 | 7 | 7 | 7 | 7 | 7 | 7 | 7 | 7 | 7 | 7 | 7 |
| | Antioxidant | | 0.5 | 0.5 | 0.5 | 0.5 | 0.5 | 0.5 | 0.5 | 0.5 | 0.5 | 0.5 | 0.5 | 0.5 | 0.5 | 0.5 |
| | Silicone resin | | | | | | 25 | 15 | 10 | | | | | | | |
| | Bisphenol A-type epoxy resin 1 | | | | | | | | | 25 | | 25 | | | | |
| **Formulation (pars by mass)** | Bisphenol A-type epoxy resin 2 | | | | | | | | | | 25 | | 25 | | | |
| | Dicyandiamide | | | | | | | | | 0.5 | 0.5 | 0.5 | 0.5 | | | |
| | Moisture-curable adhesive | | | | | | | | | | | | | 25 | | |
| | Si-containing PPG polymer | | | | | | | | | | | | | | 25 | |
| | Coupling agent | | | | | | | | | | | | | | 0.3 | |
| | Calcium carbonate | | 60 | 20 | 20 | 35 | 20 | 20 | 20 | 20 | 20 | | | | | |
| | Thermally expandable graphite | | | 40 | 40 | 40 | 40 | 40 | 40 | 40 | 40 | 40 | 40 | 40 | 40 | 40 |
| | Expandable flame retardant | | 55 | 55 | 55 | 55 | 55 | 55 | 55 | 55 | 55 | 55 | 55 | 55 | 55 | 55 |
| | **Total** | | 222.5 | 215.5 | 222.5 | 237.5 | 247.5 | 237.5 | 232.5 | 248.0 | 248.0 | 228.0 | 228.0 | 227.5 | 227.8 | 202.5 |
| **Composition Based on total amount (% by mass)** | **Thermoplastic resin** | | **31.5*%*** | **32.5%** | **31.5 *%*** | **29.5%** | **28.3%** | **29.5%** | **30.1%** | **28.2%** | **28.2%** | **30.7%** | 30.7% | 30.8% | 30.7% | 34.6% |
| | **Thermally expandable graphite** | | **0.0%** | **18.6%** | **18.0%** | **16.8%** | **16.2%** | **16.8%** | **17.2%** | **16.1%** | **16.1%** | **17.5%** | 17.5% | 17.6% | 17.6% | 19.8% |
| | **Expandable flame retardant** | | **24.7%** | **25.5%** | **24.7%** | **23.2%** | **22.2%** | **23.2%** | **23.7%** | **22.2*** | **22.2%** | **24.1%** | 24.1% | 24.2% | 24.1% | 27.2% |
| | **Total of thermally expandable compounds** | | **24.7%** | **44.1%** | **42.7%** | **40.0%** | **38.4 %** | **40.0%** | **40.9%** | **38.3 %** | **38.3%** | **41.7%** | 41.7% | 41.8% | 41.7% | 46.9% |
| **Expandable flame retardant/thermally expandable graphite (mass ratio)** | | | **-** | **1.38** | **1.38** | **1.38** | **1.38** | **1.38** | **1.38** | **1.38** | **1.38** | **1.38** | 1.38 | 1.38 | 1.38 | 1.38 |
| **Viscosity** | **Viscosity at 160°C (1 rpm) 10,000 mPa·s** | | 120 | 60 | 58 | 75 | 32 | 40 | 47 | 45 | 40 | 5 | 4 | 5 | 4 | 6 |
| | **Viscosity at 160°C (10 rpm) 10,000 mPa·s** | | 11 | 17 | 16 | 18 | 11 | 13 | 14 | 13 | 12 | 5 | 4 | 5 | 4 | 6 |
| | **TI Value** | | 10.9 | 3.5 | 3.6 | 4.2 | 2.9 | 3.1 | 3.4 | 3.5 | 3.3 | 1.0 | 1.0 | 1.0 | 1.0 | 1.0 |
| **Dripping evaluation** | **After normal aging** | **200°C × 10 minutes** | +++ | +++ | +++ | +++ | +++ | +++ | +++ | +++ | +++ | ++ | ++ | +++ | +++ | + |
| | | **300°C × 4 minutes** | +++ | ++ | ++ | +++ | +++ | +++ | +++ | +++ | ++ | +++ | ++ | +++ | +++ | + |

In each of Examples 1 to 9, the viscosity of the resin composition at 1 rpm at 160°C was high, so that the coated film (thermally expandable refractory material) formed by coating the iron plate with the resin composition and solidifying the resin composition did not drip or dripped only a little even when heated to a high temperature. Therefore, it is presumed that the effect of suppressing the spread of fire in the event of fire is high.

On the other hand, in each of Examples 10 to 13, the viscosity of the resin composition at 1 rpm at 160°C was low, but since the resin compositions comprised a reactive component such as a thermosetting component or a moisture-curable component, the coated film (thermally expandable refractory material) formed by coating the iron plate with the resin composition and solidifying the resin composition did not drip or dripped only a little even when heated to a high temperature. Therefore, it is presumed that the effect of suppressing the spread of fire in the event of fire is high.

In contrast, in Comparative Example 1, the viscosity of the resin composition at 1 rpm at 160°C was less than 250,000 mPa·s and comprised no reactive components, so that the coated film (thermally expandable refractory material) formed by coating the iron plate with the resin composition and solidifying the resin composition dripped significantly when heated to a high temperature. Therefore, it is presumed that the effect of suppressing the spread of fire in the event of fire cannot be sufficiently enhanced.

## Claims

1. A resin composition comprising a thermoplastic resin that is solid at an ordinary temperature and is flowable at 160°C,
the resin composition having a viscosity at 1 rpm at 160°C of 250,000 mPa•s or more.

2. A resin composition comprising a thermoplastic resin that is solid at an ordinary temperature and is flowable at 160°C,
and further comprising a reactive component.

3. The resin composition according to claim 1, further comprising a reactive component.

4. The resin composition according to claim 2 or 3, wherein the reactive component is at least one selected from the group consisting of a thermosetting component and a moisture-curable component.

5. The resin composition according to any one of claims 1 to 4, comprising a thermally expandable compound.

6. The resin composition according to claim 5, wherein the thermally expandable compound comprises a thermally expandable graphite.

7. The resin composition according to claim 5 or 6, wherein the thermally expandable compound comprises an expandable flame retardant.

8. The resin composition according to any one of claims 1 to 7, comprising a tackifying resin.

9. The resin composition according to any one of claims 1 to 8, comprising a wax.

10. The resin composition according to any one of claims 1 to 9, further comprising a thixotropic agent.

11. The resin composition according to claim 10, wherein the thixotropic agent is at least one selected from the group consisting of a calcium carbonate particle, amide, fumed silica and a glass fiber.

12. The resin composition according to any one of claims 1 and 3 to 11, wherein the ratio of the viscosity at 1 rpm to the viscosity at 10 rpm at 160°C is more than 1.3.

13. A thermally expandable refractory material, comprising the resin composition according to any one of claims 1 to 12.
